# FASCICULE DE BREVET EUROPEEN

(11) **EP 1 888 870 B1**
(45) Date de publication et mention de la délivrance du brevet: **30.07.2008**
(21) Numéro de dépôt: 06778583.2
(22) Date de dépôt: 07.06.2006
(51) Int. Cl.: E06C 1/36, E06C 5/02, B63B 27/14, B64C 1/24, B64D 9/00

(54) **SYSTEME D'ECHELLE, NOTAMMENT POUR VEHICULES**
LEITERSYSTEM, INSBESONDERE FÜR FAHRZEUGE
LADDER SYSTEM, ESPECIALLY FOR VEHICLES

(30) Priorité: 08.06.2005 FR 0505795
(43) Date de publication de la demande: 20.02.2008
(73) Titulaire: AIRBUS France, 31060 Toulouse (FR)
(72) Inventeur: GUERING, Bernard, F-31850 Montrabe (FR)
(74) Mandataire: Bonnetat, Christian
(86) Numéro de dépôt international: PCT/FR2006/001286
(87) Numéro de publication internationale: WO 2006/131645

(56) Documents cités:
- US-A- 2 758 770
- US-A- 2 924 291
- US-A- 4 432 436
- US-A1- 2004 159 279

## Description

La présente invention concerne un système d'échelle apte à être utilisé à bord de véhicules, notamment à bord d'aéronefs civils, pour franchir une paroi de ceux-ci.

On comprend aisément qu'à cause des mouvements de tels véhicules, il est nécessaire que l'échelle utilisée puisse être maintenue fermement à ladite paroi pendant son utilisation. De plus, par suite du peu de place disponible à bord, ladite échelle doit être pliable, pour présenter un encombrement minimal lorsqu'elle n'est pas utilisée.

Par exemple par le document US-A-2 924 291, on connaît déjà une échelle pour bateau comportant :
- un moyen d'accrochage à une paroi dudit bateau ;
- un montant unique pourvu dudit moyen d'accrochage à sa partie supérieure ;
- des barreaux disposés sur ledit montant unique, de part et d'autre de celui-ci, lesdits barreaux étant articulés par leurs extrémités internes audit montant unique autour d'axes orthogonaux à ce dernier de façon à pouvoir prendre deux positions extrêmes, à savoir :
   ■ une position repliée pour laquelle lesdits barreaux sont appliqués contre ledit montant unique avec leur extrémité externe dirigée vers ladite partie supérieure dudit montant unique ; et
   ■ une position déployée pour laquelle lesdits barreaux sont disposés orthogonalement audit montant unique et bloqués vers le bas par appui de leurs extrémités internes contre ledit montant unique ; et
- des moyens pour prendre appui contre ladite paroi, de part et d'autre dudit montant unique.

Dans ce système antérieur connu, la stabilité de l'échelle n'est pas très bonne, malgré la présence desdits moyens d'appui, du fait que le moyen d'accrochage est constitué par un large crochet destiné à coopérer avec le plat-bord du bateau. De plus, lesdits moyens d'appui sont d'une seule pièce articulée sur le montant unique et, en position repliée le long de ce dernier, ladite pièce présente un encombrement relativement important.

La présente invention a pour objet de perfectionner le système du document antérieur rappelé ci-dessus, de façon à obtenir une grande stabilité en utilisation et un encombrement aussi faible que possible, hors des périodes d'utilisation.

A cette fin, selon l'invention, le système d'échelle comportant une échelle telle que mentionnée ci-dessus est remarquable en ce que :
- sur ladite paroi est rapporté un ancrage spécialement adapté audit moyen d'accrochage de ladite échelle ; et
- lesdits moyens d'appui comportent deux bras disposés symétriquement par rapport audit montant unique et articulés par leur extrémité interne audit montant unique autour d'axes orthogonaux à ce dernier de façon à pouvoir prendre deux positions extrêmes, à savoir :
   ■ une position repliée pour laquelle les deux bras sont appliqués contre ledit montant unique, de part et d'autre de celui-ci, avec leur extrémité externe dirigée vers ladite partie supérieure dudit montant unique ; et
   ■ une position déployée pour laquelle les deux bras sont disposés orthogonalement audit montant unique et bloqués vers le bas par appui de leur extrémité interne contre ledit montant unique.

Il est avantageux que les extrémités externes des deux bras présentent la forme d'arcs, de façon que l'ensemble des deux bras présente, en position déployée, la forme au moins approximative d'un croissant.

Il est également avantageux que la partie supérieure dudit montant unique présente une forme d'arc correspondant à celle desdits bras, de sorte que, en position repliée desdits bras, les extrémités externes de ceux-ci soient au moins partiellement superposées à la forme d'arc de ladite partie supérieure du montant unique.

Les formes d'arc des extrémités externes desdits bras et de ladite partie supérieure du montant unique peuvent être angulaires.

De préférence, ledit montant unique, lesdits barreaux et lesdits bras sont réalisés en tube à section carrée ou rectangulaire.

Pour améliorer encore la stabilité de l'échelle conforme à la présente invention, en utilisation, on peut lui associer une plaque portant ledit ancrage adapté au moyen d'accrochage de l'échelle, ladite plaque étant apte à être fixée sur ladite paroi ou analogue. Ainsi, en position déployée desdits bras, les extrémités externes de ceux-ci peuvent s'appuyer sur ladite plaque. Des moyens de positionnement et de maintien coopérants sont alors avantageusement prévus, pour partie, auxdites extrémités externes desdits bras et, pour partie, sur ladite plaque.

De préférence, afin de limiter le nombre des barreaux, ceux-ci sont alternativement disposés d'un côté et de l'autre dudit montant unique.

Les figures du dessin annexé feront bien comprendre comment l'invention peut être réalisée. Sur ces figures, des références identiques désignent des éléments semblables.

La figure 1 est une vue en perspective d'une échelle conforme à la présente invention, en position déployée.

La figure 2 est une vue en perspective, sous un angle différent, de l'échelle de la figure 1 en position repliée.

La figure 3 est une vue, en perspective, semblable à celle de la figure 2, de ladite échelle en position déployée et accrochée à son ancrage.

L'échelle, conforme à la présente invention et représentée sur les figures, comporte un montant unique 1, des barreaux 2 et deux bras d'appui 3, lesdits barreaux 2 et lesdits bras 3 étant articulés sur ledit montant unique 1.

Le montant unique 1, les barreaux 2 et les bras d'appui 3 sont réalisés à partir de tubes de section quadrangulaire, notamment carrée, lesdits tubes étant par exemple en aluminium.

Le montant unique 1 est pour l'essentiel rectiligne, sauf à sa partie supérieure 1 S, qui est angulairement arquée par rapport au reste rectiligne dudit montant unique. A son extrémité libre, ladite partie supérieure arquée 1 S porte un double crochet 4.

Les barreaux 2 sont répartis le long du montant unique 1, alternativement de part et d'autre de celui-ci. Chacun d'eux est articulé, par son extrémité interne 2I, audit montant unique 1 autour d'un axe excentré 5, orthogonal audit montant 1.

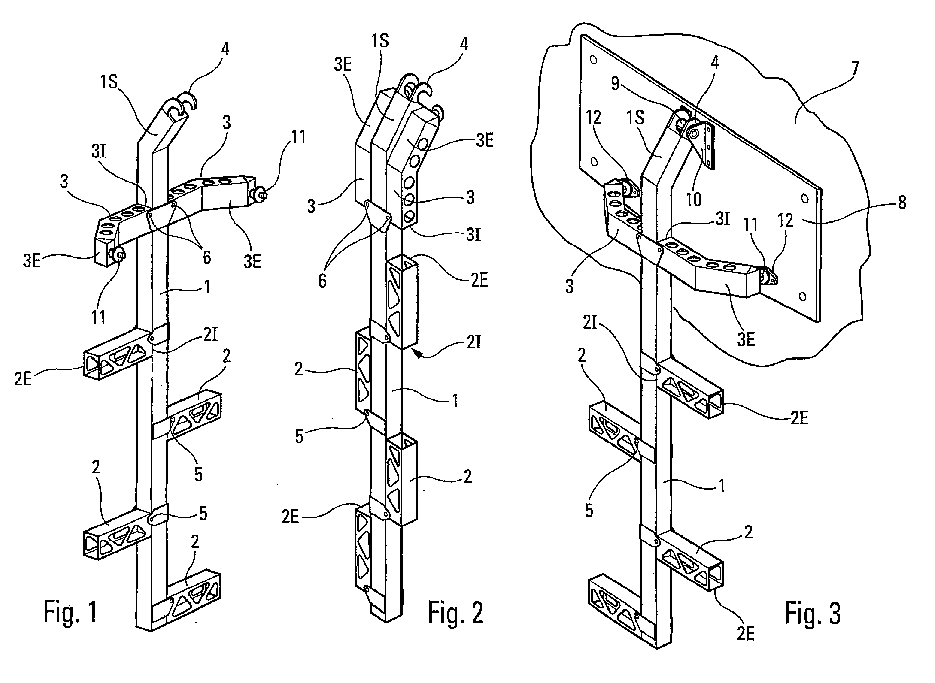

Ainsi, les barreaux 2 peuvent prendre :
- une position extrême repliée (voir la figure 2) pour laquelle lesdits barreaux 2 sont appliqués contre le montant unique 1 avec leur extrémité externe 2E dirigée vers la partie supérieure 1 S de celui-ci ; et
- une position extrême déployée (voir les figures 1 et 3) pour laquelle lesdits barreaux 2 sont disposés orthogonalement audit montant unique 1 et bloqués vers le bas (à l'opposé de la partie supérieure 1 S du montant unique 1) par l'appui de leurs extrémités internes 2I contre le montant unique 1.

Les deux bras d'appui 3 sont disposés symétriquement par rapport au montant unique 1 et leurs extrémités externes 3E sont angulairement arquées, en correspondance avec l'extrémité supérieure 1 S du montant unique 1.

Les deux bras d'appui 3 sont articulés par leur extrémité interne 3I audit montant unique 1 autour d'axes excentrés 6, orthogonaux audit montant. Ainsi, les deux bras d'appui 3 peuvent prendre :
- une position extrême repliée (voir la figure 2) pour laquelle ils sont appliqués contre ledit montant unique, de part et d'autre de celui-ci, avec leurs extrémités externes arquées 3E dirigées vers le haut et superposées à l'extrémité supérieure arquée 1 S du montant unique 1 ; et
- une position extrême déployée (voir les figures 1 et 3) pour laquelle les deux bras 3 sont disposés orthogonalement du montant unique 1 en formant une sorte de croissant et bloqués vers le bas par appui de leur extrémité interne 3I contre ledit montant unique 1.

Comme l'illustre la figure 3, pour utiliser l'échelle des figures 1 et 2 le long d'une paroi 7, on peut prévoir une plaque 8, apte à être fixée à ladite paroi 7, et portant un ancrage fixe pour ladite échelle, spécialement adapté au double crochet 4. Sur la figure 3, ledit ancrage est constitué par une tige horizontale 9 maintenue entre deux chapes 10. Ainsi, on peut fixer l'échelle contre la paroi 7 en accrochant le double crochet 4 sur la tige 9, les deux bras 3 étant alors en position déployée et s'appuyant contre la plaque 8 par leurs extrémités externes 3E. Les portions arquées 1 S et 3E du montant 1 et des bras 3 peuvent être prévues pour que, dans la position d'utilisation de la figure 3, le montant unique 1 soit au moins approximativement vertical.

Pour déterminer précisément la position d'utilisation de ladite échelle et améliorer la stabilité de celle-ci dans ladite position d'utilisation, on prévoit des organes de positionnement et de maintien coopérants 11, 12 pourvus éventuellement de moyens d'amortissement (par exemple du type chevilles et trous), d'une part, aux extrémités 3E des bras 3 et, d'autre part, sur la plaque 8.

## Revendications

1. Système d'échelle pour une paroi (7), ladite échelle comportant :
- un moyen d'accrochage (4) à ladite paroi (7) ;
- un montant unique (1) pourvu dudit moyen d'accrochage (4) à sa partie supérieure (1 S) ;
- des barreaux (2) disposés sur ledit montant unique (1), de part et d'autre de celui-ci, lesdits barreaux (2) étant articulés par leurs extrémités internes (2I) audit montant unique (1) autour d'axes (5) orthogonaux à ce dernier de façon à pouvoir prendre deux positions extrêmes, à savoir :
. une position repliée pour laquelle lesdits barreaux (2) sont appliqués contre ledit montant unique (1) avec leur extrémité externe (2E) dirigée vers ladite partie supérieure (1 S) dudit montant unique (1) ; et
. une position déployée pour laquelle lesdits barreaux (2) sont disposés orthogonalement audit montant unique (1) et bloqués vers le bas par appui de leurs extrémités internes (2I) contre ledit montant unique (1) ; et
- des moyens (3) pour prendre appui contre ladite paroi (7), de part et d'autre dudit montant unique (1),
**caractérisée en ce que** :
- sur ladite paroi est rapporté un ancrage (9, 10) spécialement adapté audit moyen d'accrochage (4) de ladite échelle ; et
- lesdits moyens d'appui comportent deux bras (3) disposés symétriquement par rapport audit montant unique (1) et articulés par leur extrémité interne (31) audit montant unique (1) autour d'axes (6) orthogonaux à ce dernier de façon à pouvoir prendre deux positions extrêmes, à savoir :
■ une position repliée pour laquelle les deux bras (3) sont appliqués contre ledit montant unique (1), de part et d'autre de celui-ci, avec leur extrémité externe (3E) dirigée vers ladite partie supérieure (1 S) dudit montant unique (1) ; et
■ une position déployée pour laquelle les deux bras (3) sont disposés orthogonalement audit montant unique (1) et bloqués vers le bas par appui de leur extrémité interne (3I) contre ledit montant unique (1).

2. Système selon la revendication 1,
**caractérisée en ce qu'**il comporte une plaque (8) portant ledit ancrage (9, 10) et apte à être fixée sur ladite paroi (7).

3. Système selon la revendication 2,
**caractérisé en ce que**, en position déployée desdits bras (3), les extrémités externes (3E) de ceux-ci s'appuient sur ladite plaque (8).

4. Système selon la revendication 3,
**caractérisé en ce qu'**il comporte des moyens de positionnement et de maintien coopérants (11, 12) prévus, pour partie, aux extrémités externes (3E) desdits bras (3) et, pour partie, sur ladite plaque (8).

5. Echelle pour le système spécifié sous l'une quelconque des revendications 1 à 4, comportant :
- un montant unique (1) pourvu d'un moyen d'accrochage (4) à sa partie supérieure (1 S) ; et
- des barreaux (2) disposés sur ledit montant unique (1), de part et d'autre de celui-ci, lesdits barreaux (2) étant articulés par leurs extrémités internes (2I) audit montant unique (1) autour d'axes (5) orthogonaux à ce dernier de façon à pouvoir prendre deux positions extrêmes, à savoir :
. une position repliée pour laquelle lesdits barreaux (2) sont appliqués contre ledit montant unique (1) avec leur extrémité externe (2E) dirigée vers ladite partie supérieure (1S) dudit montant unique (1) ; et
. une position déployée pour laquelle lesdits barreaux (2) sont disposés orthogonalement audit montant unique (1) et bloqués vers le bas par appui de leurs extrémités internes (2I) contre ledit montant unique (1),
**caractérisée en ce qu'**elle comporte de plus deux bras (3) disposés symétriquement par rapport audit montant unique (1), les extrémités externes (3E) présentant la forme d'arcs, de façon que l'ensemble des deux bras (3) présente, en position déployée, la forme au moins approximative d'un croissant et lesdits bras (3) étant articulés par leur extrémité interne (3I) audit montant unique (1) autour d'axes (6) orthogonaux à ce dernier de façon à pouvoir prendre deux positions extrêmes, à savoir :
■ une position repliée pour laquelle les deux bras (3) sont appliqués contre ledit montant unique (1), de part et d'autre de celui-ci, avec leur extrémité externe (3E) dirigée vers ladite partie supérieure (1S) dudit montant unique (1) ; et
■ une position déployée pour laquelle les deux bras (3) sont disposés orthogonalement audit montant unique (1) et bloqués vers le bas par appui de leur extrémité interne (3I) contre ledit montant unique (1).

6. Echelle selon la revendication 5,
**caractérisée en ce que** la partie supérieure (1S) dudit montant unique (1) présente une forme d'arc correspondant à celle desdits bras (3), de sorte que, en position repliée desdits bras, les extrémités externes (3E) de ceux-ci soient au moins partiellement superposées à la forme d'arc de ladite partie supérieure (1S) du montant unique (1).

7. Echelle selon les revendications 5 et 6,
**caractérisée en ce que** les formes d'arc des extrémités externes (3E) desdits bras (3) et de ladite partie supérieure (1S) du montant unique (1) sont angulaires.

8. Echelle selon l'une des revendications 5 à 7,
**caractérisée en ce que** ledit montant unique (1), lesdits barreaux (2) et lesdits bras (3) sont réalisés en tube à section carrée ou rectangulaire.

9. Echelle selon l'une des revendications 5 à 8,
**caractérisée en ce que** lesdits barreaux (2) sont alternativement d'un côté et de l'autre dudit montant unique (1).

## Claims

1. A ladder system for a wall (7), said ladder comprising:
- a means (4) for hooking to said wall (7);
- a single post (1) provided at its upper part (1S) with said hooking means (4);
- rungs (2) arranged on said single post (1), on either side thereof, said rungs (2) being hinged by their inner ends (21) to said single post (1) about pins (5) which are orthogonal to said post so that said rungs can assume two end positions, namely:
• a folded-up position in which said rungs (2) are applied against said single post (1) with their outer end (2E) directed toward said upper part (1S) of said single post (1); and
• a deployed position in which said rungs (2) are arranged orthogonally to said single post (1) and locked downwardly by their inner ends (21) bearing against said single post (1); and
- means (3) for bearing against said wall (7), on either side of said single post (1),
**characterized in that**
- an anchorage (9, 10) specially adapted to said hooking means (4) of said ladder is affixed to said wall; and
- said bearing means comprise two arms (3) which are arranged symmetrically with respect to said single post (1) and are hinged by their inner end (31) to said single post (1) about pins (6) which are orthogonal to said post so that said arms can assume two end positions, namely:
• a folded-up position in which the two arms (3) are applied against said single post (1), on either side thereof, with their outer end (3E) directed toward said upper part (1S) of said single post (1); and
• a deployed position in which the two arms (3) are arranged orthogonally to said single post (1) and locked downwardly by their inner end (31) bearing against said single post (1).

2. The system as claimed in claim 1, **characterized in that** it comprises a plate (8) which bears said anchorage (9, 10) and which can be fastened to said wall (7).

3. The system as claimed in claim 2, **characterized in that**, when said arms (3) are in the deployed position, the outer ends (3E) thereof bear against said plate (8).

4. The system as claimed in claim 3, **characterized in that** it comprises co-acting positioning and retaining means (11, 12) provided, in part, at the outer ends (3E) of said arms (3) and, in part, on said plate (8).

5. A ladder for the system specified under any one of claims 1 to 4, comprising:
- a single post (1) provided at its upper part (1S) with a hooking means (4); and
- rungs (2) arranged on said single post (1), on either side thereof, said rungs (2) being hinged by their inner ends (2I) to said single post (1) about pins (5) which are orthogonal to said post so that said rungs can assume two end positions, namely:
• a folded-up position in which said rungs (2) are applied against said single post (1) with their outer end (2E) directed toward said upper part (1S) of said single post (1); and
• a deployed position in which said rungs (2) are arranged orthogonally to said single post (1) and locked downwardly by their inner ends (21) bearing against said single post (1),
**characterized in that** it additionally comprises two arms (3) arranged symmetrically with respect to said single post (1), the outer ends (3E) having the shape of arcs such that the two arms (3) together have, in the deployed position, the at least approximate shape of a crescent, and said arms (3) being hinged by their inner end (31) to said single post (1) about pins (6) which are orthogonal to said post so that said arms can assume two end positions, namely:
• a folded-up position in which the two arms (3) are applied against said single post (1), on either side thereof, with their outer end (3E) directed toward said upper part (1S) of said single post (1); and
• a deployed position in which the two arms (3) are arranged orthogonally to said single post
(1) and locked downwardly by their inner end (3I) bearing against said single post (1).

6. The ladder as claimed in claim 5, **characterized in that** the upper part (1S) of said single post (1) has an arc shape corresponding to that of said arms (3) such that, when said arms are in the folded-up position, the outer ends (3E) thereof are at least partially superposed with the arc shape of said upper part (1S) of the single post (1).

7. The ladder as claimed in claims 5 and 6, **characterized in that** the arc shapes of the outer ends (3E) of said arms (3) and of said upper part (1S) of the single post (1) are angular.

8. The ladder as claimed in one of claims 5 to 7, **characterized in that** said single post (1), said rungs (2) and said arms (3) are produced from a tube having a square or rectangular cross section.

9. The ladder as claimed in one of claims 5 to 8,
**characterized in that** said rungs (2) are alternately on one side and the other of said single post (1).

## Patentansprüche

1. Leitersystem für eine Wand (7), wobei die Leiter umfasst:
- ein Mittel zum Anhaken (4) an der Wand (7);
- einen einzigen Standholm (1), der an seinem oberen Teil (1S) mit dem Anhakungsmittel (4) ausgestattet ist;
- Sprossen (2), die an dem einzigen Standholm (1) beidseits an diesem angeordnet sind, wobei die Sprossen (2) mit ihren inneren Enden (2I) so an dem einzigen Standholm (1) um orthogonal zu Letzterem verlaufende Achsen (5) angelenkt sind, dass sie zwei Endstellungen annehmen können und zwar:
• eine eingeklappte Stellung, bei der die Sprossen (2) an dem einzigen Standholm (1) anliegen, wobei ihr äußeres Ende (2E) dem oberen Teil (1S) des einzigen Standholms (1) zugewandt ist und
• eine ausgeklappte Stellung, bei der die Sprossen (2) orthogonal zu dem einzigen Standholm (1) angeordnet und durch Anlage ihrer inneren Enden (2I) an dem einzigen Standholm (1) nach unten blockiert sind und
- Mittel (3) zur Anlage an der Wand (7) beidseits des einzigen Standholms (1),
**dadurch gekennzeichnet, dass**:
- an der Wand eine speziell auf das Anhakungsmittel (4) der Leiter angepasste Verankerung (9, 10) angeformt ist und
- die Anlagemittel zwei bezüglich des einzigen Standholms (1) symmetrisch angeordnete Arme (3) umfassen, die mit ihrem inneren Ende (3I) so an dem einzigen Standholm (1) um orthogonal zu Letzterem verlaufende Achsen (6) angelenkt sind, dass sie zwei Endstellungen annehmen können und zwar:
• eine eingeklappte Stellung, bei der die beiden Arme (3) an dem einzigen Standholm (1) beidseits an diesem anliegen, wobei ihr äußeres Ende (3E) dem oberen Teil (1S) des einzigen Standholms (1) zugewandt ist und
• eine ausgeklappte Stellung, bei der die beiden Arme (3) orthogonal zu dem einzigen Standholm (1) angeordnet und durch Anlage ihres inneren Endes (3I) an dem einzigen Standholm (1) nach unten blockiert sind.

2. System nach Anspruch 1,
**dadurch gekennzeichnet, dass** es eine Platte (8) umfasst, welche die Verankerung (9, 10) trägt und an der Wand (7) befestigbar ist.

3. System nach Anspruch 2,
**dadurch gekennzeichnet, dass** in ausgeklappter Stellung der Arme (3) deren äußere Enden (3E) sich auf der Platte (8) abstützen.

4. System nach Anspruch 3,
**dadurch gekennzeichnet, dass** es zusammenwirkende Positionierungs- und Haltemittel (11, 12) umfasst, die teilweise an den äußeren Enden (3E) der Arme (3) und teilweise an der Platte (8) vorgesehen sind.

5. Leiter für das unter einem der Ansprüche 1 bis 4 spezifizierte System, umfassend:
- einen einzigen Standholm (1), der an seinem oberen Teil (1S) mit einem Anhakungsmittel (4) ausgestattet ist und
- Sprossen (2), die an dem einzigen Standholm (1) beidseits an diesem angeordnet sind, wobei die Sprossen (2) mit ihren inneren Enden (2I) so an dem einzigen Standholm (1) um orthogonal zu Letzterem verlaufende Achsen (5) angelenkt sind, dass sie zwei Endstellungen annehmen können und zwar:
• eine eingeklappte Stellung, bei der die Sprossen (2) an dem einzigen Standholm (1) anliegen, wobei ihr äußeres Ende (2E) dem oberen Teil (1S) des einzigen Standholms (1) zugewandt ist und
• eine ausgeklappte Stellung, bei der die Sprossen (2) orthogonal zu dem einzigen Standholm (1) angeordnet und durch Anlage ihrer inneren Enden (2I) an dem einzigen Standholm (1) nach unten blockiert sind und
**dadurch gekennzeichnet, dass** sie außerdem zwei bezüglich des einzigen Standholms (1) symmetrisch angeordnete Arme (3) umfasst, wobei die äußeren Enden (3E) die Form von Bögen aufweisen, so dass die Anordnung der beiden Arme (3) in ausgeklappter Stellung, zumindest annähernd die Form eines Halbmonds aufweist und die Arme (3) mit ihren inneren Enden (3I) an dem einzigen Standholm (1) um orthogonal zu Letzterem verlaufende Achsen (6) angelenkt sind, so dass sie zwei Endstellungen annehmen können und zwar:
• eine eingeklappte Stellung, bei der die beiden Arme (3) an dem einzigen Standholm (1) beidseits an diesem anliegen, wobei ihr äußeres Ende (3E) dem oberen Teil (1S) des einzigen Standholms (1) zugewandt sind und
• eine ausgeklappte Position, bei die beiden Arme (3) orthogonal zu dem einzigen Standholm (1) angeordnet und durch Anlage ihres inneren Endes (3I) an dem einzigen Standholm (1) nach unten blockiert sind.

6. Leiter nach Anspruch 5,
**dadurch gekennzeichnet, dass** der obere Teil (1 S) des einzigen Standholms (1) eine Bogenform aufweist, welche derjenigen der Arme (3) entspricht, so dass in eingeklappter Stellung der Arme deren äußere Enden (3E) zumindest teilweise die Bogenform des oberen Teils (1S) des einzigen Standholms (1) überlagern.

7. Leiter nach den Ansprüchen 5 und 6,
**dadurch gekennzeichnet, dass** die Bogenformen der äußeren Enden (3E) der Arme (3) und des oberen Teils (1S) des einzigen Standholms (1) winklig sind.

8. Leiter nach einem der Ansprüche 5 bis 7,
**dadurch gekennzeichnet, dass** der einzige Standholm (1), die Sprossen (2) und die Arme (3) aus Rohren mit quadratischem oder rechteckigem Querschnitt hergestellt sind.

9. Leiter nach einem der Ansprüche 5 bis 8,
**dadurch gekennzeichnet, dass** die Sprossen (2) abwechselnd an der einen und an der anderen Seite des einzigen Standholms (1) angeordnet sind.
